# EUROPÄISCHE PATENTANMELDUNG

(11) **EP 1 069 357 A2**
(43) Veröffentlichungstag der Anmeldung: **17.01.2001**
(21) Anmeldenummer: 00114373.4
(22) Anmeldetag: 05.07.2000
(51) Int. Cl.: F16K 31/06

(54) **Stellvorrichtung für ein Magnetventil**

(30) Priorität: 16.07.1999 DE 19933329
(71) Anmelder: KARL DUNGS GMBH & CO., D-73660 Urbach (DE)
(72) Erfinder: Sontag, Rolf-Helmut, 73614 Schorndorf (DE)
(74) Vertreter: KOHLER SCHMID + PARTNER

(57) **Zusammenfassung**

Bei einer magnetischen Stellvorrichtung für zwei Stellglieder (Ventilteller 5, 9), mit einem gegen die Wirkung einer Rückstellkraft axial verschiebbaren äußeren Magnetanker (7) zur Betätigung des einen Stellelements und einem gegen die Wirkung einer Rückstellkraft axial verschiebbaren inneren Magnetanker (11) zur Betätigung des anderen Stellelements, wobei der innere Magnetanker (11) in den äußeren Magnetanker (7) längsverschiebbar hineinragt, mit einem Magnetantrieb (12), in den beide Magnetanker (7, 11) hineinragen, und mit einem am äußeren Magnetanker (7) befestigten inneren Magnetschlußkörper (20) für den inneren Magnetanker (11) ist der innere Magnetanker (11) axial zwischen äußerem Magnetanker (7) und innerem Magnetschlußkörper (20) angeordnet. Zumindest bei vollständig durch den Magnetantrieb (12) angezogenem äußerem Magnetanker (7) schließt der innere Magnetanker (11) zwischen äußerem Magnetanker (7) und innerem Magnetschlußkörper (20) einen Magnetkreis (35), in welchem der magnetische Widerstand zwischen äußerem und innerem Magnetanker (7, 11) zunächst kleiner als der magnetische Widerstand zwischen innerem Magnetanker (11) und innerem Magnetschlußkörper (20) ist und durch die daraus resultierende Magnetkraft der innere Magnetanker (11) entgegengesetzt zur Anzugsrichtung (34) des äußeren Magnetankers (7) angezogen wird. So wird eine gegenläufige Bewegung ihrer beiden Magnetanker erreicht.

## Beschreibung

Die Erfindung betrifft eine magnetische Stellvorrichtung für zwei Stellglieder, mit einem gegen die Wirkung einer Rückstellkraft axial verschiebbaren äußeren Magnetanker zur Betätigung des einen Stellelements und einem gegen die Wirkung einer Rückstellkraft axial verschiebbaren inneren Magnetanker zur Betätigung des anderen Stellelements, wobei der innere Magnetanker in den äußeren Magnetanker längsverschiebbar hineinragt, mit einem Magnetantrieb, in den beide Magnetanker hineinragen, und mit einem am äußeren Magnetanker befestigten inneren Magnetschlußkörper für den inneren Magnetanker, sowie ein entsprechendes Magnetventil.

Eine derartige magnetische Stellvorrichtung ist zum Beispiel für ein Doppelsicherheitsventil durch die DE 195 25 384 A1 bekanntgeworden.

Bei dem aus der DE 195 25 384 A1 bekannten Doppelsicherheitsventil sind die beiden Ventilteller axial übereinander in einem Gehäuse angeordnet und wirken jeweils mit einem eigenen Ventilsitz zusammen. Die Ventilteller sind jeweils mit einem Magnetanker bewegungsgekoppelt, wobei der eine im anderen axial verschiebbar geführt ist. Die beiden Magnetanker werden durch einen gemeinsamen Magnetantrieb gegen die Wirkung jeweils einer Schließfeder geöffnet, wobei bei Abschalten des Magnetantriebs die beiden Schließfedern den Schließhub der beiden Ventilteller voneinander vollständig unabhängig durchführen. Beim Öffnen werden die beiden ineinander liegenden Magnetanker durch den Magnetantrieb gleichzeitig und in der gleichen Richtung angezogen.

Es ist demgegenüber die Aufgabe der Erfindung, bei einer magnetischen Stellvorrichtung der eingangs genannten Art eine gegenläufige Bewegung ihrer beiden Magnetanker zu erreichen sowie ein Magnetventil mit einer solchen Stellvorrichtung bereitzustellen.

Diese Aufgabe wird erfindungsgemäß dadurch gelöst, daß der innere Magnetanker axial zwischen äußerem Magnetanker und innerem Magnetschlußkörper angeordnet ist und daß zumindest bei vollständig durch den Magnetantrieb angezogenem äußerem Magnetanker der innere Magnetanker zwischen äußerem Magnetanker und innerem Magnetschlußkörper einen Magnetkreis schließt, in welchem der magnetische Widerstand zwischen äußerem und innerem Magnetanker zunächst kleiner als der magnetische Widerstand zwischen innerem Magnetanker und innerem Magnetschlußkörper ist und durch die daraus resultierende Magnetkraft der innere Magnetanker entgegengesetzt zum äußeren Magnetanker angezogen wird.

In dem Magnetantrieb sind die zwei Magnetanker so ineinander angeordnet, daß der äußere Magnetanker gleichzeitig für den inneren Magnetanker einen Magnetschlußkörper bildet. Dies bewirkt, daß sich die beiden Magnetanker je nach konstruktiver Auslegung, gleichzeitig oder nacheinander, in entgegengesetzter Richtung bewegen. Die beiden Magnetkreise für den inneren und äußeren Magnetanker können so ausgelegt werden, daß aufgrund unterschiedlicher magnetisch leitender Querschnitte und unterschiedlicher Rückstellkräfte die beiden Magnetanker gleichzeitig oder nacheinander betätigt werden. Die Erfindung ermöglicht eine magnetische Stellvorrichtung mit zwei gegenläufig wirkenden Ankern, insbesondere zur Betätigung von zwei Stellgliedern unterschiedlicher Funktion.

Bei bevorzugten Ausführungsformen der Erfindung sind die beiden Magnetanker koaxial zueinander angeordnet, da sich so die magnetische Stellvorrichtung besonders kompakt und platzsparend gestalten und damit preiswert herstellen läßt.

Wenn bei nichtangezogenem äußerem Magnetanker der innere Magnetanker von dem inneren Magnetschlußkörper axial beabstandet ist, hat dies zur Folge, daß zuerst der äußere Magnetanker angezogen wird und erst dann, wenn der innere Magnetschlußkörper in die Nähe des inneren Magnetankers mitgezogen wurde, sich auch der innere Magnetanker bewegt. Das heißt, die beiden Magnetanker werden nacheinander in entgegengesetzter Richtung angezogen.

Wenn hingegen bei nichtangezogenem äußerem Magnetanker der innere Magnetanker bereits in den inneren Magnetschlußkörper axial hineinragt, ist der Magnetkreis durch den inneren Magnetanker geschlossen, so daß der innere und der äußere Magnetanker gleichzeitig in entgegengesetzter Richtungen angezogen werden.

Bei einer besonders bevorzugten Ausführungsform vergrößert sich der für den inneren Magnetanker magnetisch wirksame Querschnitt des inneren Magnetschlußkörpers in dessen Anzugsrichtung. Durch diese Maßnahme wird erreicht, daß sich die auf den inneren Magnetanker wirkende Anzugskraft mit dem Anzugsweg des äußeren Magnetankers erhöht.

Vorzugsweise ist der innere Magnetschlußkörper als Magnetschlußhülse ausgebildet, in deren Öffnung der angezogene innere Magnetanker hineinragt. Das dem inneren Magnetanker zugewandte Ende der Magnetschlußhülse kann außenseitig in Richtung auf den inneren Magnetanker konisch verjüngt sein, wodurch der magnetische Widerstand zwischen innerem Magnetanker und Magnetschlußhülse mit dem Anzugsweg des äußeren Magnetankers reduziert wird.

Wenn der Magnetantrieb zwei Betriebsstufen für zwei unterschiedlich große Magnetfelder aufweist, können die beiden Magnetanker gezielt betätigt werden. Bei einer besonders einfachen Ausführungsform umfaßt der Magnetantrieb eine Magnetspule mit zwei elektrisch voneinander getrennten Wicklungen, die zu unterschiedlich großen Magnetfeldern führen, wenn sie unabhängig voneinander mit Spannung beaufschlagt werden. Alternativ oder ergänzend kann bei einer anderen Ausführungsform eine elektronische Schaltvorrichtung für die Versorgungsspannung und/oder -strom des Magnetantriebs vorgesehen sein, mit der die Magnetkraft des Magnetantriebs für eine Betätigung des äußeren Magnetankers und für eine zusätzliche Betätigung des inneren Magnetankers eingestellt werden kann.

Bei einer vorteilhaften Ausführungsform ist der innere Magnetschlußkörper am äußeren Magnetanker durch ein separates axiales Verbindungselement befestigt, das z.B. als ein den inneren Magnetanker umgebendes dünnwandiges Rohr ausgebildet ist. Das Verbindungselement sollte aus nichtmagnetischem Material gefertigt sein, um das Magnetfeld des Magnetantriebs nicht zu beeinflussen.

Vorzugsweise ist für den äußeren Magnetanker eine zwei- oder mehrteilige äußere Magnetschlußhülse vorgesehen, in die hinein der äußere Magnetanker angezogen wird. Die äußere Magnetschlußhülse kann radial innerhalb einer Magnetspule des Magnetantriebs angeordnet sein und aus einem magnetischen Oberteil und magnetischen Unterteil bestehen, die im axialen Abstand voneinander angeordnet sind. Zwischen Ober- und Unterteil kann noch ein nichtmagnetisches Mittelteil vorgesehen sein. Bei einer derart 2 bzw. 3-stufig aufgebauten Magnetschlußhülse lassen sich besonders günstige magnetische Kraftlinienverteilungen im Magnetantrieb erzeugen.

Damit der innere Magnetanker nicht am äußeren Magnetanker haftet und damit keine unerwünschte Beeinflussung der Bewegung der beiden Magnetanker auftritt, ist bei einer vorteilhaften Ausführungsform zwischen äußerem und innerem Magnetanker jeweils ein Abstandshalter aus nichtmagnetischem Material vorgesehen.

Bei einer anderen Ausführungsform ist zwischen innerem Magnetanker und innerem Magnetschlußkörper sowie zwischen äußerem Magnetanker und dessen Polanlage jeweils eine Antihaftscheibe vorgesehen, die vorzugsweise aus nichtmagnetschem Material gefertigt ist. Damit wird ein "Festkleben" des inneren Magnetankers am inneren Magnetschlußkörper bzw. des äußeren Magnetankers an seiner Polanlage nach Abschalten des Magnetantriebs durch magnetische Remanenz in den jeweiligen Teilen verhindert.

Die Erfindung betrifft auch ein Magnetventil mit einer wie oben beschrieben ausgebildeten magnetischen Stellvorrichtung, dessen erster Ventilteller mit dem äußeren Magnetanker und dessen zweiter Ventilteller mit dem inneren Magnetanker bewegungsgekoppelt sind.

In dem erfindungsgemäßen Magnetventil lassen sich zwei Antriebe für zwei Stellglieder unterschiedlicher Funktion realisieren. Das Magnetventil kann z.B. als zweistufiges Ventil für vornehmlich geringe Betriebsdrücke oder als Ventil mit integrierter elektrischer Proportionalregelung ausgebildet sein. Das Doppelmagnetventil ermöglicht es auch, in einem Gehäuse sowohl ein Absperrventil als auch ein Leckgasventil mit einem gemeinsamen Antrieb zu integrieren.

Vorzugsweise ist der erste Ventilteller am inneren Magnetschlußkörper vorgesehen und der zweite Ventilteller durch den inneren Magnetschlußkörper hindurch am inneren Magnetanker befestigt. Die letztere Verbindung kann z.B. durch eine den inneren Magnetschlußkörper durchgreifende Stange gebildet sein, die den inneren Magnetanker und den zweiten Ventilteller starr miteinander verbindet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzahlung zu verstehen, sondern haben vielmehr beispielhaften Charakter für die Schilderung der Erfindung.

Es zeigt:
- Fig. 1: schematisch einen Längsschnitt durch den Antrieb eines Magnetventils mit der erfindungsgemäßen magnetischen Stellvorrichtung bei nicht aktiviertem Magnetfeld;
- Fig. 2: in vergrößerter Ansicht das Detail II in Fig. 1;
- Fig. 3: in einer der Fig. 2 entsprechenden Ansicht eine Modifikation der in Fig. 1 gezeigten magnetischen Stellvorrichtung ;
- Fign. 4a bis 4c: schematisch den im Magnetventil der Fig. 1 herrschenden Magnetfluß in verschiedenen Betriebsstufen der magnetischen Stellvorrichtung; und
- Fign. 5a und 5b: eine Anwendung des in Fig. 1 gezeigten Magnetventils als Gasmagnetventil mit integriertem Leckgasventil.

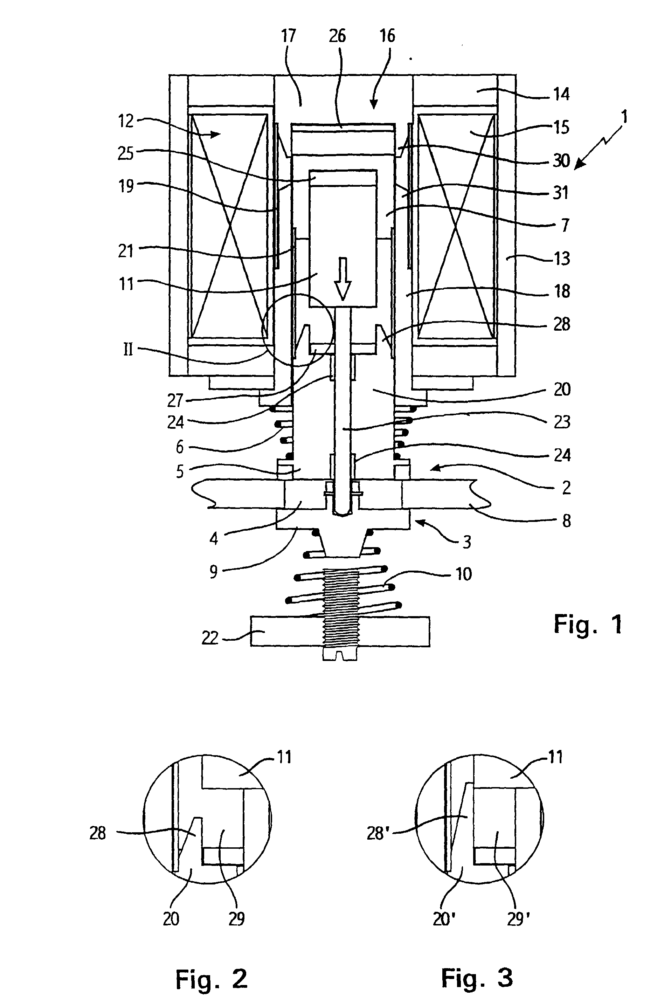

In **Fig. 1** ist mit **1** der Antrieb eines Magnetventils bezeichnet, dessen zwei in Serie geschaltete Ventile **2** und **3** eine gemeinsame Ventilöffnung **4** haben und koaxial zueinander angeordnet sind. Das erste Ventil 2 umfaßt einen ersten Ventilteller **5**, eine erste Schließfeder **6** und als Stellglied für den ersten Ventilteller 5 einen äußeren Magnetanker **7** aus ferromagnetischem Material auf. An der Oberseite der Ventilöffnungswandung **8** befindet sich der Ventilsitz für den ersten Ventilteller 5. Das zweite Ventil 3 umfaßt einen zweiten Ventilteller **9**, eine zweite Schließfeder **10** und als Stellglied für den zweiten Ventilteller 9 einen inneren Magnetanker **11** aus ferromagnetischem Material auf. Der Ventilsitz für den zweiten Ventilteller 9 befindet sich an der Unterseite der Ventilöffnungswandung 8.

Zum Öffnen der beiden Ventile 2, 3 dient ein gemeinsamer Magnetantrieb **12**, der im wesentlichen aus einem Magnetgehäuse **13**, einem Joch **14**, einer Magnetspule **15** und einer darin angeordneten äußeren Magnetschlußhülse **16** besteht. Diese Magnetschlußhülse 16 ist zweiteilig aus einem etwa topfförmigen ferromagnetischen Oberteil **17** und einem rohrförmigen ferromagnetischen Unterteil **18** gebildet, wobei die beiden Teile 17, 18 mittels eines dünnwandigen Rohrs **19** aus nichtferromagnetischem Material axial voneinander beabstandet sind.

Mit dem hohlgebohrten bzw. topfförmigen äußeren Magnetanker 7 ist ein innerer Magnetschlußkörper **20** aus ferromagnetischem Material über ein starres Verbindungselement **21** axial beabstandet und bewegungsgekoppelt. Im gezeigten Ausführungsbeispiel ist das Verbindungselement 21 ein dünnwandiges Rohr, das jeweils außenseitig an den beiden Teilen 7 und 20 befestigt ist. An dem inneren Magnetschlußkörper 20 ist der eine erste Ventilteller 5 vorgesehen. Der äußere Magnetanker 7 und der innere Magnetschlußkörper 20 sind in der Magnetschlußhülse 16 axial verschiebbar geführt. Die erste Schließfeder 6 ist zwischen erstem Ventilteller 5 und dem Unterteil 18 abgestützt, während die zweite Schließfeder 10 zwischen zweitem Ventilteller 9 und dem Ventilgehäuse **22** abgestützt ist.

Der innere Magnetanker 11 ragt in den äußeren Magnetanker 7 hinein und ist darin axial verschiebbar geführt. Über eine den inneren Magnetschlußkörper 20 durchgreifende Stange **23**, ist der zweite Ventilteller 9 mit dem inneren Magnetanker 11 starr verbunden, wobei für die Stange 23 zwei Führungshülsen **24** vorgesehen sind. Alternativ können die Führungsflächen des inneren Magnetschlußkörpers 20 auch mit einer reibungsarmen Beschichtung (z.B. PTFE) versehen sein.

Damit der äußere und der innere Magnetanker 7, 11 nicht aneinander haften und damit keine unerwünschte Beeinflussung der Bewegung der beiden Magnetanker auftritt, ist dazwischen ein Abstandshalter **25** aus nichtferromagnetischem Material angeordnet. Ein Festkleben der beiden Magnetanker 7, 11 nach Abfall des Magnetfeldes der Magnetspule 15 ist jeweils durch eine Antihaftscheibe **26**, **27** zwischen äußerem Magnetanker 11 und Oberteil 17 bzw. zwischen innerem Magnetanker 11 und innerem Magnetschlußkörper 20 verhindert.

Im Falle der Anwendung des Doppelmagnetventils 1 in einem Steuergerät für Gase oder Flüssigkeiten können die beiden Teile 17, 18 der Magnetschlußhülse 16 sowie der äußere Magnetanker 7 und der Magnetschlußkörper 20 mittels des Rohrs 19 bzw. des Verbindungselements 21 dicht miteinander verbunden sein.

Wie die **Fig. 2** zeigt, ist der innere Magnetanker 11 bei nichtbestromter Magnetspule 15 vom inneren Magnetschlußkörper 20 axial beabstandet. Außerdem ist am inneren Magnetschlußkörper 20 eine ringförmige Steuerkante **28** vorgesehen, die sich außenseitig in Richtung auf den inneren Magnetanker 11 konisch verjüngt. Diese Steuerkante 28 bewirkt, daß der zwischen innerem Magnetanker 11 und innerem Magnetschlußkörper 20 wirksame magnetische Widerstand reduziert wird, wenn der innere Magnetanker 11 in die Öffnung **29** des inneren Magnetschlußkörpers 20 hineinragt.

In der Ausführungsform nach **Fig. 3** ragt der innere Magnetanker 11 bei nichtbestromter Magnetspule 15 bereits etwas in die Öffnung **29'** des inneren Magnetschlußkörpers **20'** hinein, da die Steuerkante **28'** hier höher als in Fig. 2 ausgebildet ist. In beiden Ausführungsformen kann der innere Magnetanker 11 gleich weit in Richtung auf den inneren Magnetschlußkörper 20 axial verschoben werden.

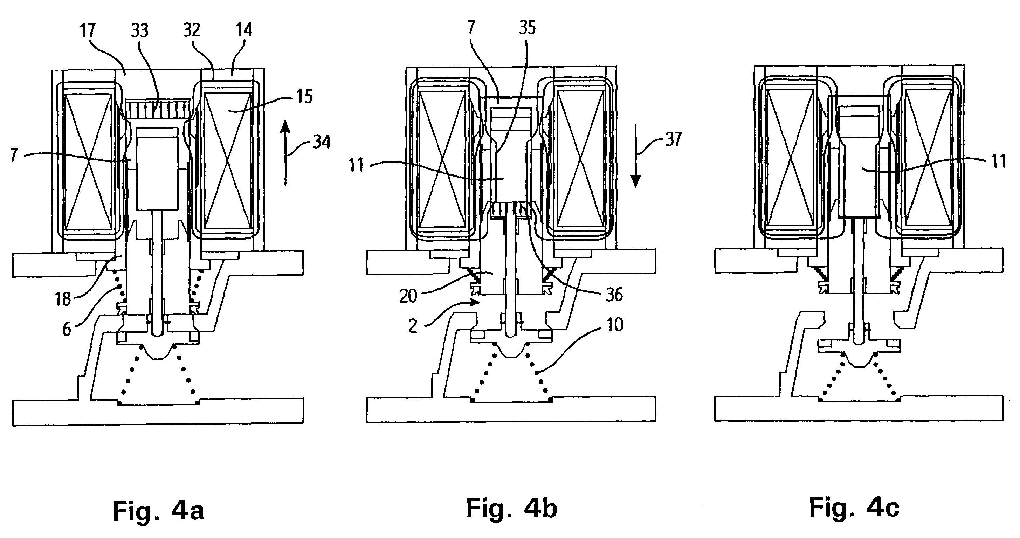

In **Fig. 4** ist die Funktionsweise des in den Fign. 1 und 2 gezeigten Magnetventils 1 dargestellt:
Durch Bestromen der Magnetspule 15 wird ein Magnetfeld erzeugt, das über Steuerkante **30**, (Fig. 1) am Ober- und Unterteil 17, 18 der Magnetschlußhülse 16 auf den äußeren Magnetanker 7 übertragen wird. Es bildet sich über das Joch 14, das Oberteil 17, den äußeren Magnetanker 7 und das Unterteil 18 ein geschlossener erster Magnetkreis **32** aus. Der Magnetkreis 32 ist so ausgelegt, daß die Kraftlinien bei erregter Spule 15 anfangs über das Oberteil 17 in den äußeren Magnetanker 7 und über diesen in das Unterteil der Magnethülse 18 fließen. Dadurch entsteht zwischen dem äußeren Magnetanker 7 und dem Oberteil 17 eine Kraft 33, die den äußeren Magnetanker 7 gegen das Oberteil 17 in Richtung 34 bis zur Anlage an die Antihaftscheibe 26 gegen die Wirkung der Schließfeder 6 zieht. Da der äußere Magnetanker 7 mit der inneren Magnetschlußhülse 20 verbunden ist, wird diese mitgezogen. Somit wird der Magnetkreis 35 über die innere Magnetschlußhülse 20 geschlossen. Dieses bewirkt, daß zwischen dem inneren Anker 11 und der inneren Magnetschlußhülse 20 in Richtung 37 eine Kraft wirkt, die den inneren Anker 11 gegen die Schließfeder 10 bis zur Anlage an die Antihaftscheibe 27 zieht. Somit bewegt sich zunächst nur der äußere Magnetanker 7, und zeitversetzt, wenn der innere Magnetschlußkörper 20 den zweiten Magnetkreis 35 schließt, bewegt sich auch der innere Magnetanker 11. Die beiden Ventile 2, 3 werden somit nacheinander geöffnet.

Durch Abstimmung der Querschnitte der beiden Magnetanker 7, 11 sowie der Schließfedern 6, 10 können abhängig von der Position des äußeren Magnetankers 7 unterschiedliche Arten der Bewegung sowie der Kräfteverhältnisse erreicht werden. Einen entscheidenden Einfluß auf die Bewegungsweise der beiden Magnetanker 7, 11 hat insbesondere die Gestaltung der Steuerkanten 28 des inneren Magnetschlußkörpers 20 und der Steuerkanten 30, 31 der Magnetschlußhülse 16.

Die beiden Magnetkreise 32, 35 können auch so ausgelegt werden, daß aufgrund unterschiedlicher magnetisch leitender Querschnitte und unterschiedlicher Schließfedern 6, 10 die beiden Magnetanker 7, 11 gleichzeitig aktiviert werden. So bewegen sich bei der Ausführungsform nach Fig. 3 die beiden Magnetanker 7, 11, da der zweite Magnetkreis bei nichtangezogenem äußeren Magnetanker 7 durch den inneren Magnetschlußkörper 20' bereits geschlossen ist, gleichzeitig in entgegengesetzten Richtungen. Die beiden Ventile 2, 3 werden gleichzeitig geöffnet.

Die beiden Magnetanker 7, 11 können auch über das Magnetfeld nacheinander gezielt angesteuert werden, z.B. indem die Versorgungsspannung der Magnetspule 15 variiert wird. Liegt an der Magnetspule 15 keine Spannung (0 Volt) an, ist das Magnetventil geschlossen (Fig. 4a). Bei einer Spannung von z.B. 110 Volt ist das erste Ventil 2 bereits vollständig geöffnet, während das zweite Ventil 3 weiterhin geschlossen ist (Fig. 4b). Erst bei noch höheren Spannungen (z.B. 150 Volt) reicht das Magnetfeld dann aus, um den inneren Magnetanker 11 anzuziehen und damit auch das zweite Ventil 3 zu öffnen. Bei einer Spannung von z.B. 220 Volt ist dann auch das zweite Ventil 3 vollständig geöffnet (Fig. 4c). Bei geeigneter Auslegung der den zweiten Magnetkreis bestimmenden Parameter, z.B. der Steuerkante 28 des Magnetschlußkörpers 20, läßt sich der innere Magnetanker 11 bzw. das zweite Ventil 3 proportional zur Spulenspannung aufsteuern. Das Magnetventil kann durch Ansteuerung mit nur zwei Spannungen (z.B. 110 Volt und 220 Volt) auch als zweistufiges Ventil, insbesondere für geringe Betriebsdrücke, eingesetzt werden.

Zwei unterschiedlich große Magnetfelder lassen sich auch durch eine Magnetspule 15 mit zwei übereinanderliegenden Wicklungen erzeugen, indem zunächst nur die eine Wicklung zum Betätigen des äußeren Magnetankers 7 und dann auch die andere Wicklung zum Betätigen auch des inneren Magnetankers 7 mit Spannung beaufschlagt wird.

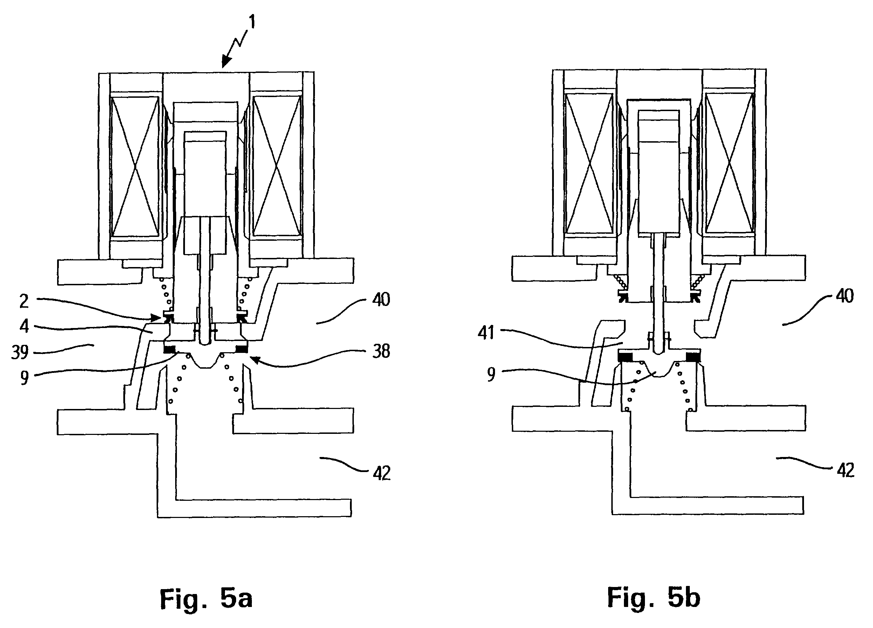

**Fig. 5** zeigt eine Anwendung des Doppelmagnetventils 1 als Gasmagnetventil mit integriertem Leckgasventil **38**. Die von einem Gaseintrittsraum **39** durch die Ventilöffnung 4 in einen Gasaustrittsraum **40** abströmende Gasmenge wird durch die beiden Ventile 2, 3 geregelt. Dabei verschließt der zweite Ventilteller 9 in seiner vollständig geöffneten Stellung (Fig. 5b) eine weitere Ventilöffnung **41**, die ansonsten den Gasaustrittsraum 40 mit einer Leckageableitung **42** verbindet (Fig. 5a).

## Patentansprüche

1. Magnetische Stellvorrichtung für zwei Stellglieder (Ventilteller 5, 9), mit einem gegen die Wirkung einer Rückstellkraft axial verschiebbaren äußeren Magnetanker (7) zur Betätigung des einen Stellelements und einem gegen die Wirkung einer Rückstellkraft axial verschiebbaren inneren Magnetanker (11) zur Betätigung des anderen Stellelements, wobei der innere Magnetanker (11) in den äußeren Magnetanker (7) längsverschiebbar hineinragt, mit einem Magnetantrieb (12), in den beide Magnetanker (7, 11) hineinragen, und mit einem am äußeren Magnetanker (7) befestigten inneren Magnetschlußkörper (20; 20') für den inneren Magnetanker (11),
dadurch gekennzeichnet,
daß der innere Magnetanker (11) axial zwischen äußerem Magnetanker (7) und innerem Magnetschlußkörper (20; 20') angeordnet ist und daß zumindest bei vollständig durch den Magnetantrieb (12) angezogenem äußerem Magnetanker (7) der innere Magnetanker (11) zwischen äußerem Magnetanker (7) und innerem Magnetschlußkörper (20; 20') einen Magnetkreis (35) schließt, in welchem der magnetische Widerstand zwischen äußerem und innerem Magnetanker (7, 11) zunächst kleiner als der magnetische Widerstand zwischen innerem Magnetanker (11) und innerem Magnetschlußkörper (20; 20') ist und durch die daraus resultierende Magnetkraft der innere Magnetanker (11) entgegengesetzt zur Anzugsrichtung (34) des äußeren Magnetankers (7) angezogen wird.

2. Magnetische Stellvorrichtung nach Anspruch 1, dadurch gekennzeichnet, daß die beiden Magnetanker (7, 11) koaxial zueinander angeordnet sind.

3. Magnetische Stellvorrichtung nach Anspruch 1 oder 2, dadurch gekennzeichnet, daß bei nichtangezogenem äußerem Magnetanker (7) der innere Magnetanker (11) von dem inneren Magnetschlußkörper (20) axial beabstandet ist.

4. Magnetische Stellvorrichtung nach Anspruch 1 oder 2, dadurch gekennzeichnet, daß bei nichtangezogenem äußerem Magnetanker (7) der innere Magnetanker (11) in den inneren Magnetschlußkörper (20') axial hineinragt.

5. Magnetische Stellvorrichtung nach einem der vorhergehenden Ansprüche, dadurch gekennzeichnet, daß sich der für den inneren Magnetanker (11) magnetisch wirksame Querschnitt des inneren Magnetschlußkörpers (20; 20') in dessen Anzugsrichtung (34) vergrößert.

6. Magnetische Stellvorrichtung nach einem der vorhergehenden Ansprüche, dadurch gekennzeichnet, daß der innere Magnetschlußkörper (20; 20') als Magnetschlußhülse ausgebildet ist, in deren Öffnung (29; 29') der angezogene innere Magnetanker (11) hineinragt.

7. Magnetische Stellvorrichtung nach Anspruch 6, dadurch gekennzeichnet, daß die Magnetschlußhülse sich außenseitig in Richtung auf den inneren Magnetanker (11) konisch verjüngt.

8. Magnetische Stellvorrichtung nach einem der vorhergehenden Ansprüche, dadurch gekennzeichnet, daß der Magnetantrieb (12) eine Magnetspule (15) mit zwei elektrisch voneinander getrennten Wicklungen umfaßt.

9. Magnetische Stellvorrichtung nach einem der vorhergehenden Ansprüche, dadurch gekennzeichnet, daß eine elektronische Schaltvorrichtung für die Versorgungsspannung und/oder -strom des Magnetantriebs (12) vorgesehen ist, mit der die Magnetkraft des Magnetantriebs (12) für eine Betätigung des äußeren Magnetankers (7) und für eine zusätzliche Betätigung des inneren Magnetankers (12) eingestellt werden kann.

10. Magnetische Stellvorrichtung nach einem der vorhergehenden Ansprüche, dadurch gekennzeichnet, daß der innere Magnetschlußkörper (20; 20') am äußeren Magnetanker (7) durch ein separates axiales Verbindungselement (21) befestigt ist.

11. Magnetische Stellvorrichtung nach Anspruch 10, dadurch gekennzeichnet, daß das Verbindungselement (21) als ein den inneren Magnetanker (11) umgebendes, vorzugsweise dünnwandiges Rohr ausgebildet ist.

12. Magnetische Stellvorrichtung nach Anspruch 10 oder 11, dadurch gekennzeichnet, daß das Verbindungselement (21) aus nichtmagnetischem Material gebildet ist.

13. Magnetische Stellvorrichtung nach einem der vorhergehenden Ansprüche, dadurch gekennzeichnet, daß für den äußeren Magnetanker (7) eine zweiteilige äußere Magnetschlußhülse (16) vorgesehen ist, in die hinein der äußere Magnetanker (7) angezogen wird.

14. Magnetische Stellvorrichtung nach einem der vorhergehenden Ansprüche, dadurch gekennzeichnet, daß zwischen äußerem und innerem Magnetanker (7, 11) ein Abstandshalter (25) vorgesehen ist.

15. Magnetische Stellvorrichtung nach einem der vorhergehenden Ansprüche, dadurch gekennzeichnet, daß zwischen innerem Magnetanker (11) und innerem Magnetschlußkörper (20; 20') eine Antihaftscheibe (27) aus nichtmagnetischem Material vorgesehen ist.

16. Magnetventil mit einer magnetische Stellvorrichtung nach einem der vorhergehenden Ansprüche, dessen erster Ventilteller (5) mit dem äußeren Magnetanker (7) und dessen zweiter Ventilteller (9) mit dem inneren Magnetanker (11) bewegungsgekoppelt ist.

17. Magnetventil nach Anspruch 16, dadurch gekennzeichnet, daß der erste Ventilteller (5) am inneren Magnetschlußkörper (20; 20') vorgesehen ist.

18. Magnetventil nach Anspruch 16 oder 17, dadurch gekennzeichnet, daß der zweite Ventilteller (9) durch den inneren Magnetschlußkörper (20; 20') hindurch am inneren Magnetanker (11) befestigt ist.
